# EUROPEAN PATENT APPLICATION

(11) **EP 4 850 840 A1**
(43) Date of publication of application: **09.12.2026**
(21) Application number: 26179655.1
(22) Date of filing: 19.05.2026
(51) Int. Cl.: B23K 9/29, B23K 9/28

(54) **AUTOMATIC ELECTRODE STICK OUT IN TUNGSTEN INERT GAS (TIG) WELDING SETUPS**

(30) Priority: 30.05.2025 US 202563814929 P; 06.05.2026 US 202619669399
(71) Applicant: Illinois Tool Works Inc., Glenview IL 60025 (US)
(72) Inventor: GELLINGS, Beau Daniel, Glenview, 60025 (US)
(74) Representative: HGF

(57) **Abstract**

Systems and methods are provided for automatic electrode stick out in tungsten inert gas (TIG) welding setups. An example welding-type system may include a welding-type torch that comprises an electrode holding component, with the electrode holding component is configured to engage an electrode, and with the electrode holding component is configured to a stick out the electrode by a pre-set amount at least before a start of a weld, in response to a user interaction with the electrode holding component. The pre-set amount may be set or adjusted based on one or more attributes of the electrode, and/or based on input and/or information relating to the sticking out of the pre-set amount. The pre-set amount may be set or adjusted dynamically before the start of the weld.

## Description

### CLAIM OF PRIORITY

This patent application claims priority to and claims benefit from United States Provisional Patent Application Serial No. 63/814,929, filed on May 30, 2025. The above identified application is hereby incorporated herein by reference in its entirety.

### BACKGROUND

Welding has become increasingly ubiquitous. Welding may be performed in a manual manner (e.g., being performed by a human), or at least some aspects of it may be performed in an automated manner. Equipment or components used during welding operations may be driven using engines. For example, engines may be used to drive, for example, generators, power sources, etc. used during welding operations.

In some instances, conventional welding-type systems may have some limitations and/or disadvantages. For example, conventional welding-type systems may have limitations with respect to setting up some of the components and/or material used during welding operation.

Further limitations and disadvantages of conventional approaches will become apparent to one skilled in the art, through comparison of such approaches with some aspects of the present systems and methods set forth in the remainder of this disclosure with reference to the drawings.

### BRIEF SUMMARY

Aspects of the present disclosure relate to welding solutions. More specifically, various implementations in accordance with the present disclosure are directed to systems and methods for automatic electrode stick out in tungsten inert gas (TIG) welding setups, substantially as illustrated by or described in connection with at least one of the figures, and as set forth more completely in the claims.

These and other advantages, aspects and novel features of the present disclosure, as well as details of an illustrated implementation thereof, will be more fully understood from the following description and drawings.

### BRIEF DESCRIPTION OF THE DRAWINGS

Fig. 1 shows an example welding-type setup.
Fig. 2 shows an example tungsten inert gas (TIG) welding system.
Fig. 3 illustrates example screw-like mechanism based electrode holding components for use in providing automatic feeding of electrode stick out.
Fig. 4 illustrates example clicking-like mechanism based electrode holding components for use in providing automatic feeding of electrode stick out.
Fig. 5 illustrates example sliding-like mechanism based electrode holding component for use in providing automatic feeding of electrode stick out.

### DETAILED DESCRIPTION

Solutions based on the present disclosure are directed to improving operation and use of welding-type setups or systems, particularly with respect to setting up the setups and systems for welding operations. In particular, for tungsten inert gas (TIG) welding operations, in some instances it may be necessary to have the tungsten electrode stick out by a particular amount or length before a TIG weld is initiated. Such electrode stick out may pose some challenges, however, as it is common for users, especially new and/or inexperienced users, to struggle with determining the correct amount of electrode stick out. In various embodiments in accordance with the present disclosure, such issues may be addressed such as by configuring TIG based welding-type systems to automatically stick out a particular amount (or length) of the electrode, such as before initiating any weld.

As utilized herein, the terms "circuits" and "circuitry" refer to physical electronic components (e.g., hardware), and any software and/or firmware ("code") that may configure the hardware, be executed by the hardware, and/or otherwise be associated with the hardware. As used herein, for example, a particular processor and memory (e.g., a volatile or non-volatile memory device, a general computer-readable medium, etc.) may comprise a first "circuit" when executing a first one or more lines of code and may comprise a second "circuit" when executing a second one or more lines of code. Additionally, a circuit may comprise analog and/or digital circuitry. Such circuitry may operate, for example, on analog and/or digital signals. It should be understood that a circuit may be in a single device or chip, on a single motherboard, in a single chassis, in a plurality of enclosures at a single geographical location, in a plurality of enclosures distributed over a plurality of geographical locations, etc. Similarly, the term "module" may, for example, refer to a physical electronic components (e.g., hardware) and any software and/or firmware ("code") that may configure the hardware, be executed by the hardware, and/or otherwise be associated with the hardware.

As utilized herein, circuitry or module is "operable" to perform a function whenever the circuitry or module comprises the necessary hardware and code (if any is necessary) to perform the function, regardless of whether performance of the function is disabled or not (e.g., by a user-configurable setting, factory trim, etc.).

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

Welding-type power, as used herein, refers to power suitable for welding, plasma cutting, induction heating, CAC-A (carbon arc cutting/air) and/or hot wire welding/preheating (including laser welding and laser cladding). Welding-type power supply, as used herein, refers to a power supply that can provide welding-type power. A welding-type power supply may include power generation components (e.g., engines, generators, etc.) and/or power conversion circuitry to convert primary power (e.g., engine-driven power generation, mains power, etc.) to welding-type power.

Welding-type operations, as used herein, comprise operations in accordance with any known welding technique, including flame welding techniques such as oxy-fuel welding, electric welding techniques such as shielded metal arc welding (e.g., stick welding), metal inert gas welding (MIG), tungsten inert gas welding (TIG), resistance welding, as well as gouging (e.g., carbon arc gouging), cutting (e.g., plasma cutting), brazing, induction heating, soldering, and/or the like.

Welding-type setup, as used herein, refers to any setup comprising welding related devices or equipment (e.g., welding power sources, welding torch, welding gear such as headwear and the like, auxiliary devices or systems, etc.) which are used in facilitating and/or in conjunction with welding-type operations.

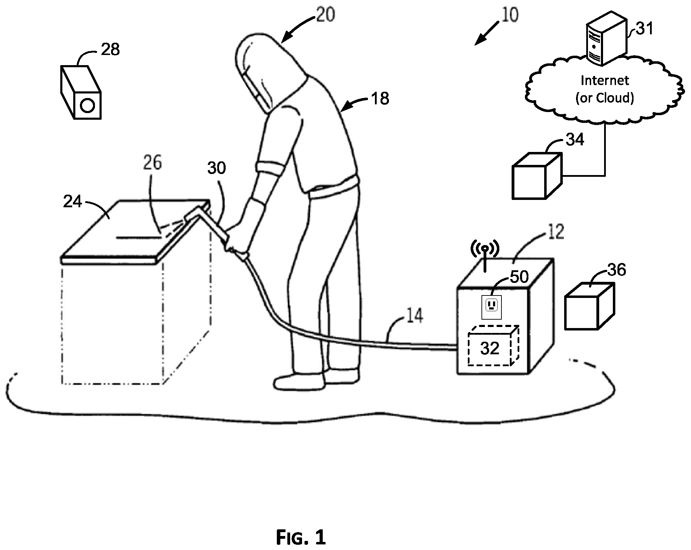

Fig. 1 shows an example welding-type setup. Referring to Fig. 1, there is shown an example welding-type setup 10 in which an operator (user) 18 is wearing welding headwear 20 and welding a workpiece 24 using a torch 30 to which power is delivered by equipment 12 via a conduit 14, with weld monitoring equipment 28, which may be available for use in monitoring welding operations.

The equipment 12 may comprise a power source, optionally a source of a shield gas and, where wire/filler material is to be provided automatically, a wire feeder. Further, in some instances an engine 32 may be used to drive equipment or components used during welding operations. The engine 32 may comprise a gas engine or a liquefied petroleum (LP) engine. The engine 32 may drive generators, power sources, etc. used during welding operations. For example, the welding-type setup 10 may comprise a generator (not shown) driven by the engine 32, which may be used in generating power for use in driving at least some of the components of the welding-type setup 10.

Optionally in any implementation, the welding-type setup 10 may comprise a starting battery 36, which may be used to provide DC power (e.g., at 12V). In this regard, the starting battery 36 may be used, e.g., to enable starting the engine 32 when not running (e.g., at start of operation, when in shutoff mode, etc.). The starting battery 36 may also be used, in some instances, to provide low power if/when needed. While the starting battery 36 is shown as a separate, external component, in some cases the starting battery 36 may be disposed within the equipment 12.

Optionally in any implementation, the welding-type setup 10 may comprise weld monitoring equipment 28. The weld monitoring equipment 28 may be used to monitor various aspects of welding operations, such as in real-time-that is as welding is taking place. For example, the weld monitoring equipment 28 may be operable to monitor arc characteristics such as length, current, voltage, frequency, variation, and instability. Data obtained from the weld monitoring may be used (e.g., by the operator 18 and/or by an automated quality control system) to ensure proper welding.

Optionally in any implementation, the welding-type setup 10 may comprise one or more auxiliary electrical receptacles 50. For example, the auxiliary receptacles 50 may be disposed in the equipment 12 (as shown in Fig. 1), and/or may be disposed at different component(s). The auxiliary receptacles 50 may be used to provide power-e.g., AC power, such as 110VAC and/or 220VAC power, and/or DC power, such as 12 VDC and/or 24VDC power. The provided power may be supplied by the equipment 12. In some implementations, the welding-type setup 10 may be configured to enable a user to select output configurations for the auxiliary receptacles 50.

Optionally in any implementation, equipment or components used during welding operations may be driven using engines. For example, the engine 32 may drive generators, power sources, etc. used during welding operations. In some instances, it may be desired to obtain information relating to used engines. For example, data relating to engines (and operations thereof) used during welding operations may be collected and used (e.g., based on analysis thereof) in monitoring and optimizing operations of these engines. The collection and use of such data may be performed telematically-that is, the data may be collected locally, subjected to at least some processing locally (e.g., formatting, etc.), and then may be communicated to remote management entities (e.g., centralized management locations, engine providers, etc.), using wireless technologies (e.g., cellular, satellite, etc.).

Optionally in any implementation, a dedicated controller (e.g., shown as element 34 in Fig. 1) may be used to control, centralize, and/or optimize data handling operations. The controller 34 may comprise suitable circuitry, hardware, software, or any combination thereof for use in performing various aspects of the engine related data handling operations. For example, the controller 34 may be operable to interface with the engine 32 to obtain data related thereto. The controller 34 may track or obtain welding related data (e.g., from weld monitoring equipment 28, from equipment 12, etc.). The controller 34 may then transmit the data (e.g., both engine related and weld related data), such as to facilitate remote monitoring and/or management, by way of wireless communications. This may be done using cellular and/or satellite telematics hardware, for example.

The welding-type setup 10 of Fig. 1 may be configured to form a weld joint by any known welding-type technique. For example, optionally in any implementation, the welding equipment 12 may be arc welding equipment that provides a direct current (DC) or alternating current (AC) to a consumable or non-consumable electrode of the torch 30. The electrode delivers the current to the point of welding on the workpiece 24. In the welding-type setup 10, the operator 18 controls the location and operation of the electrode by manipulating the torch 30 and triggering the starting and stopping of the current flow. In other implementations, a robot or automated fixture may control the position of the electrode and/or may send operating parameters or trigger commands to the welding system. When current is flowing, an arc 26 is developed between the electrode and the workpiece 24. The conduit 14 and the electrode thus deliver current and voltage sufficient to create the electric arc 26 between the electrode and the workpiece. The arc 26 locally melts the workpiece 24 and welding wire or rod supplied to the weld joint (the electrode in the case of a consumable electrode or a separate wire or rod in the case of a non-consumable electrode) at the point of welding between electrode and the workpiece 24, thereby forming a weld joint when the metal cools.

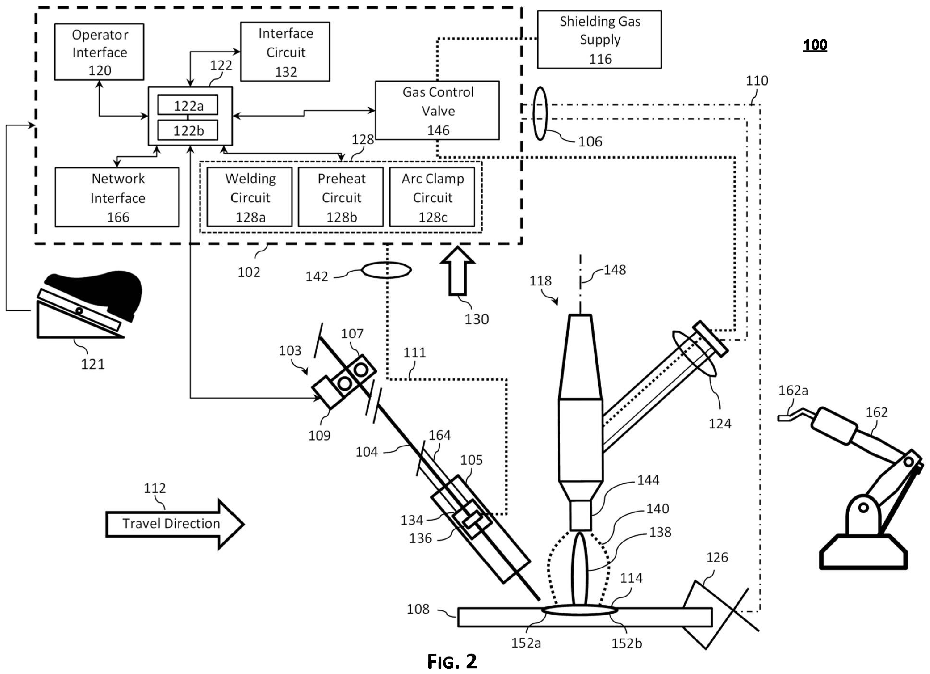

An example tungsten inert gas (TIG) welding based implementation is illustrated in Fig. 2, with the TIG welding implementation incorporating automatic electrode stick out features and/or mechanisms implemented in accordance with the present disclosure.

Fig. 2 shows an example tungsten inert gas (TIG) welding system. Shown in Fig. 2 is an example welding system 100. In this regard, the welding system 100 represents an example tungsten inert gas (TIG) welding (also referred to as gas tungsten arc welding (GTAW)) based implementation of the welding-type setup 10 of Fig. 1.

The welding system 100 may be configured to perform, for example, hot-wire TIG welds on a welding work piece 108. As illustrated in Fig. 2, the welding system comprises a power supply 102, a welding torch 118, and a heater assembly 134. As illustrated, the power supply 102 and the welding torch 118 are coupled via conductors or conduits 106, while the power supply 102 and the heater assembly 134 are coupled via conductors or conduits 142. As illustrated, the heater assembly 134 and filler material 104 may be provided via, for example, a pen or stylus 105.

The illustrated power supply 102 comprises a control circuitry 122, an operator interface 120, interface circuit 132, power conversion circuit 128, network interface 166, and one or more gas control valves 146. While the various components may be provided in a single enclosure, one or more components of the power supply 102 may be provided outside the enclosure. In one example, the one or more gas control valves 146 could be provided as a separate device.

Terminals are typically provided on the power supply 102 to allow the conductors or conduits 106, 142 to be coupled to the power supply 102 to allow for power and gas to be provided from the power supply 102 to the welding torch 118 or to the heater assembly 134. Terminals may also be provided to allow data to be exchanged between the power supply 102, operator controls (e.g., a foot pedal 121), and a remote device (or even another component of the welding system 100). For example, the power supply 102 may provide welding-type power and shielding gas 140 to the welding torch 118 at a location adjacent to the welding work piece 108 via the conduits 106, while the power supply 102 may provide preheat power to the heater assembly 134 via the conduits 142. A work cable 110 is run to the welding work piece 108 to complete an electrical circuit between the power supply 102 (e.g., the welding circuitry 128a and/or preheat circuitry 128b) and the welding work piece 108 via a work clamp 126.

The welding system 100 is configured for weld settings (e.g., weld parameters, such as voltage, wire feed speed, current, gas flow, inductance, physical weld parameters, advanced welding programs, pulse parameters, etc.) to be selected by the operator and/or a welding sequence, such as via an operator interface 120 provided on the power supply 102. The operator interface 120 may receive inputs using any input device, such as via a keypad, keyboard, buttons, touch screen, voice activation system, wireless device, foot pedal 121, etc.

The operator interface 120 will typically be incorporated into a front faceplate of the power supply 102, and may allow for selection of settings such as the weld process, the type of wire to be used, voltage and current settings, and so forth. In particular, the example welding system 100 is configured to allow for welding with various steels, aluminums, or other welding wire that is channeled through the welding torch 118. These weld settings are communicated to a control circuitry 122 within the power supply 102. The system may be particularly adapted to implement welding regimes configured for certain electrode types. The control circuitry 122 operates to control generation of welding power output that is supplied to the electrode 144 for carrying out the desired welding operation.

The operator interface 120 may receive inputs specifying wire material (e.g., steel, aluminum), wire type (e.g., solid, cored), wire diameter, gas type, and/or any other parameters. Upon receiving the input, the control circuitry 122 determines the welding output for the welding application. For example, the control circuitry 122 may determine weld voltage, weld current, wire feed speed, inductance, weld pulse width, relative pulse amplitude, wave shape, preheating voltage, preheating current, preheating pulse, preheating resistance, preheating energy input, and/or any other welding and/or preheating parameters for a welding process based at least in part on the input received through the operator interface 120.

The welding torch 118 applies welding-type power from the power supply 102 to the electrode 144, typically by a welding cable 124. Similarly, shielding gas 140 from a shielding gas supply 116 is fed through the welding cable 124. The welding torch 118 may be a TIG torch, but other welding torch are contemplated (e.g., GMAW, FCAW, SMAW).

The filler material 104 may be delivered to the weld pool 114 arc via a liner 164, which may be positioned on or near the welding torch 118. When configured for manual or semi-automatic operation whereby a human operator manipulates the position and/or angle of the filler material 104 and/or welding torch 118, the filler material 104 may be provided via a handheld pen or stylus 105. A foot pedal 121 may also be provided to enable the human operator to start and stop supply of welding-type power from the welding circuitry 128a to the welding torch 118. The foot pedal 121 may be connected to the welding system 100 via the operator interface 120 or the control circuitry 122 via, for example, a conduit and/or electrical connecter (e.g., a plug).

The welding current flows between the electrode 144 and the welding work piece 108, which in turn generates the welding arc 138 between the weld pool 114 on the welding work piece 108 and the electrode 144 during the welding operation. The electrode 144 may be, for example, a tungsten electrode.

When the welding arc 138 exists between the electrode 144 and the welding work piece 108, an electrical circuit is completed and the welding power flows, depending on polarity, through the electrode 144, across the welding arc 138, across the welding work piece(s) 108, and returns to the power conversion circuit 128 via the work cable 110 and work clamp 126. When polarity is reversed, the current flow direction is reversed. Therefore, the work cable 110 and work clamp 126 allow for closing an electrical circuit from the power supply 102 (e.g., the power conversion circuit 128) through the welding work piece 108.

During a welding operation, the filler material 104 is fed into and becomes part of the weld pool 114. Due to the temperature difference, the filler material 104 is melted by heat from the weld pool 114, which is ultimately heated by the welding arc 138. By preheating the filler material 104, a welding arc 138 may be generated with reduced arc energy because the weld pool 114 does not require as much heat (energy) to melt the incoming filler material 104.

The control circuitry 122 includes one or more controller(s) and/or processor(s) 122a that controls the operations of the power supply 102. The control circuitry 122 receives and processes multiple inputs associated with the performance and demands of the system. The processor(s) 122a may include one or more microprocessors, such as one or more "general-purpose" microprocessors, one or more special-purpose microprocessors and/or application-specific integrated circuit (ASICs), one or more microcontrollers, and/or any other type of processing and/or logic device. For example, the control circuitry 122 may include one or more digital signal processors (DSPs). The control circuitry 122 may include circuitry such as relay circuitry, voltage and current sensing circuitry, power storage circuitry, and/or other circuitry, and is configured to sense the primary power received by the power supply 102.

The example control circuitry 122 includes one or more memory device(s) 122b. The memory device(s) 122b may include volatile and/or nonvolatile memory and/or storage devices, such as random access memory (RAM), read only memory (ROM), flash memory, hard drives, solid state storage, and/or any other suitable optical, magnetic, and/or solid-state storage mediums. The memory device(s) 122b store data (e.g., data corresponding to a welding application), instructions (e.g., software or firmware to perform welding processes), and/or any other appropriate data. Examples of stored data for a welding application include an attitude (e.g., orientation) of a welding torch, a distance between the contact tip and a work piece, a voltage, a current, welding device settings, and so forth. The memory device 122b may store machine executable instructions (e.g., firmware or software) for execution by the processor(s) 122a. Additionally or alternatively, one or more control schemes for various welding processes, along with associated settings and parameters, may be stored in the memory device(s) 122b, along with machine executable instructions configured to provide a specific output (e.g., initiate wire feed, enable gas flow, capture welding current data, detect short circuit parameters, determine amount of spatter) during operation.

The power conversion circuit 128 is coupled to the control circuitry 122. The power conversion circuit 128 converts the input power from a source of electrical power as indicated by arrow 130 to one or both of output welding-type power and/or preheat power, which are output to the welding torch 118 and the heater assembly 134, respectively. For example, as illustrated, the power conversion circuit 128 can comprise welding circuitry 128a, preheat circuitry 128b, and an arc clamp circuit 128c. For example, welding-type power may pass from the welding circuitry 128a to the electrode 144 of the welding torch 118, through the welding work piece 108, and back to the welding circuitry 128a via the work cable 110 and work clamp 126 to maintain the welding arc 138. Similarly, preheat power may pass from the preheat circuitry 128b to the filler material 104 (e.g., via a contact tip 136 of a heater assembly 134), through the welding work piece 108, and back to the preheat circuitry 128b via the work cable 110 and work clamp 126 to preheat the filler material 104 during the welding operation.

The arc clamp circuit 128c, in conjunction with the control circuitry 122, may be used to control operation of the welding circuitry 128a and/or the preheat circuitry 128b of the power conversion circuit 128. An arc clamp circuit 128c, as used herein, refers to a circuit that limits the output voltage of the power supply 102 by providing a current path alternative to the arc so that an arc is extinguished, prevented from forming, or otherwise controlled. The arc clamp circuit 128c can be passive, wherein it operates without control, or active, wherein it operates in response to one or more control signals.

Such an arc clamp circuit 128c may include a diode and/or a transistor. For example, the arc clamp circuit 128c may include a transient voltage suppressor (TVS) and/or a plurality of diodes, arranged such that the voltage drop across the arc clamp circuit 128c limits the current in the arc at a desired voltage across the arc clamp circuit 128c in an example. TVS includes modules or devices that are designed to react to sudden or momentary over voltage conditions. For example, leads and/or circuitry may be connected between the arc clamp circuit 128c and one or both of the electrode 144 and the contact tip 136 to provide a feedback signal to the control circuitry 122. A feedback circuit may be used that includes a current and/or voltage sensor. The arc clamp circuit 128c may be controlled in response to current and/or voltage measured from these and/or other sensors. In one example, a control loop may be used to monitor the average voltage of the preheat-type power over time, where the preheat-type power is adjusted (e.g., lowered, shut off, etc.) when an unwanted or unexpected deviation from the average voltage is detected. In some examples, an arc clamp circuit 128c may be used to control formation of an arc between the filler material 104 and the welding work piece 108 by clamping the voltage to less than an arc striking voltage.

In operation, the control circuitry 122 receives information from the arc clamp circuit 128c to control the voltage across the arc and/or control the current through the arc by providing an alternative current path. The control circuitry 122 can prevent the voltage or current from rising above a predetermined threshold level, and/or to control an arc or short circuit between the filler material 104 and the welding work piece 108 via the arc clamp circuit 128c. For example, in the case of preheating, the arc clamp circuit 128c can redirect the flow of current such that part or all of the current from the preheat circuitry 128b bypasses existing path with the filler material 104, such that the voltage and/or current level does not exceed a threshold value.

The heater assembly 134 may be integrated with, for example, a pen or stylus 105 for manual or semi-automatic operation. For ease of illustration, portions of the stylus 105, heater assembly 134, and liner 164 are cut away in Fig. 2. As illustrated, in some examples, the heater assembly 134 may include a single contact tip 136 that electrically connects the preheat circuitry 128b to the filler material 104. In operation, the preheat circuitry 128b supplies a preheat power to the heater assembly 134 via a power cable 111 (e.g., via conduits 142), which passes the preheat power between the contact tip 136 and the work cable 110 via the filler material 104 to heat the filler material 104. In one example, the preheat power enters the filler material 104 from the power cable 111 via the contact tip 136 and exits via the work cable 110 (or vice versa, depending on current flow direction). Current flowing through the filler material 104 heats the filler material 104 through a technique called resistive preheating.

Using the work cable 110 as a return obviates the need to run multiple cables between the preheat circuitry 128b and the heater assembly 134, thereby making it easier for the operator to manipulate the filler material 104 (e.g., the stylus 105). As a result, this arrangement is well-suited for manual and semi-automatic operation where a human operator manipulates the position and/or angle for the pen or stylus 105 and the welding torch 118. In some examples, while the welding torch 118 and the heater assembly 134 are illustrated as separate components, the heater assembly 134 may be coupled to, or integrated with, the welding torch 118 where the filler material 104 is fed to the weld pool 114 via the liner 164. In certain aspects, the filler material 104 could be supplied using a wire feeder.

In some examples, whether manual, semi-automatic, or fully automatic operation, the filler material 104 may be dispensed from a source (e.g., a wire source, such as a spool) via a wire-feeding mechanism 103. In one example, the wire-feeding mechanism 103 may comprise a drive roller 107 that is driven by an electric motor 109. In some examples, the electric motor 109 is configured to control the direction and speed of the filler material 104 supplied, for example, to the weld pool 114. The electric motor 109 may be controlled by the control circuitry 122 as a function of one or more welding parameters, such voltage, current, bead size, pool width, travel speed, etc. To that end, the electric motor 109 may be configured to provide feedback to the control circuitry 122 (e.g., motor position, speed, direction, etc.).

In one example, as will be described in connection with Figs. 8 and 9, the wire-feeding mechanism 103 may configured to advance and retract the filler material 104 during a welding operation to achieve a reciprocating motion while feeding the filler material 104. For example, in addition to more generally feeding the filler material 104 into the weld pool 114, the wire-feeding mechanism 103 may advance and retract the filler material 104 into and out of the weld pool 114. To that end, the wire-feeding mechanism 103 may drive the electric motor 109 forward and backwards (e.g., changing direction of the motor's rotation) to provide the reciprocating motion. In another example, the reciprocating motion may be achieved by mounting the electric motor 109 (and drive mechanisms, such as drive roller 107) to a cam mechanism. In yet another example, other intermittent drive mechanisms may be introduced to achieve a reciprocating motion while feeding the filler material 104, such as Geneva mechanisms, mutilated gears, piezo linear actuators, harmonic oscillators that vibrate the filler material 104 (or drive roller 107), etc.

Various power conversion circuits may be employed as part of the power conversion circuit 128, including choppers, boost circuitry, buck circuitry, inverters, converters, and/or other switched mode power supply circuitry, and/or any other type of power conversion circuitry. The welding circuitry 128a is adapted to create a welding-type power, such as pulsed waveforms applied to the electrode 144 at the welding torch 118. The preheat circuitry 128b is adapted to provide the preheat power that is supplied to the filler material 104 in "pulses" via one or more switches and the heater assembly 134. While the welding circuitry 128a and the preheat circuitry 128b are illustrated as components of the same power conversion circuit 128, the welding circuitry 128a and the preheat circuitry 128b may be provided as separate devices or circuits.

The power conversion circuit 128 is coupled to a source of electrical power as indicated by arrow 130. In some examples, the power received by the power conversion circuit 128 is an AC voltage between approximately 110V and 575V, between approximately 110V and 480V, or between approximately 110V and 240V. The power applied to the power conversion circuit 128 may originate in the power grid, although other sources of power may also be used, such as power generated by an engine-driven generator, batteries, fuel cells, or other alternative sources. The example power conversion circuit 128 may implement one or more controlled voltage control loop(s), one or more controlled current control loop(s), one or more controlled power control loops, one or more controlled enthalpy control loops, and/or one or more controlled resistance control loops to control the voltage and/or current output to the welding circuit and/or to the preheating circuit. As described in more detail below, the power conversion circuit 128 may be implemented using one or more converter circuits, such as multiple converter circuits in which each of the welding-type power and the preheat power is produced using separate ones of the converter circuits (e.g., the welding circuitry 128a and the preheat circuitry 128b).

In some examples, the power conversion circuit 128 may include polarity reversing circuitry. Polarity reversing circuitry reverses the polarity of the output welding-type power when directed by the control circuitry 122. For example, some welding processes, such as TIG, may enable a desired weld when the electrode has a negative polarity, known as DC electrode negative (DCEN). Other welding processes, such as SMAW or GMAW welding, may enable a desired weld when the electrode has a positive polarity, known as DC electrode positive (DCEP). When switching between a TIG process and a GMAW process, the polarity reversing circuitry may be configured to reverse the polarity from DCEN to DCEP.

While the welding system 100 is well-suited for manual operation, the present disclosure may be applied to robotic arc welding systems. In some examples, the welding torch 118 may be part of a robotic arc welding system in which a robotic arm 162 controls the location and operation of the electrode 144 by manipulating the welding torch 118. In this example, the welding torch 118 may be coupled to the working end 162a of the robotic arm 162. The heater assembly 134 and/or liner 164 may be coupled to, or integrated with, the welding torch 118 or the robotic arm 162. Operation of the robotic arm 162 (e.g., its various motors, actuators, etc.) and triggering the starting and stopping of the current flow may be controlled by the control circuitry 122 (e.g., rather than foot pedal 121). In another example, a separate robotic control circuit may be provided that is configured to control the robotic arm 162 and is communicatively coupled to control circuitry 122 via the interface circuit 132 or the network interface 166.

The power supply 102 illustrated in Fig. 2 may also include an interface circuit 132 configured to allow the control circuitry 122 to exchange signals with other devices. The power supply 102 may comprise a network interface 166 configured to communicate data (e.g., measurements, commands, etc.) with another device; whether a remote server, computer, or the like (via its network interface 166).

The filler material 104 is illustrated as being fed at the trailing edge 152a of the weld pool 114 that is on the opposite side of the travel direction 112, where the side of the travel direction 112 is called the leading edge 152b. As can be appreciated, the angle at which the welding arc 138 in formed between the electrode 144 and the weld pool 114 can be influenced by interaction of the electromagnetics forces formed by electrical currents passing through the electrode 144, the weld pool 114, and/or the filler material 104.

In accordance with the present disclosure, TIG based welding-type systems, such as the TIG based welding system 100, may be configured to provide and/or otherwise facilitate performing automatic electrode stick out in conjunction with TIG welding based operations. In this regard, TIG welding based operations may have some challenges and limitations. For example, in some instances it may be necessary to have the tungsten electrode stick out by a particular amount before a TIG weld is initiated. Typically, this is done manually-that is, the user would have to manipulate the machine to stick out the tungsten electrode by some length. Doing so may be challenging, however, as it is common for users to struggle with determining the correct amount of electrode "stick out" for TIG welding. This is especially the case with new users, who may struggle with determining the correct amount of electrode stick-out, and thus either setting or adjusting the tungsten electrode too short or too long for welding applications.

Solutions in accordance with the present disclosure address such challenges and/or limitations, particularly by use of automatic electrode stick out in TIG based welding-type systems. In this regard, in various example implementations based on the present disclosure, TIG based welding-type systems, such as the TIG based welding system 100, may be configured to automatically stick out a particular amount (or length) of the electrode, such as before initiating any weld. The stick out amount may be pre-set and/or pre-determined-that is, a pre-determined length of the electrode is fed out of the TIG torch (gun), and as such the TIG based welding-type setup (or system) may have an automatic setting for the electrode stick out. In some example implementations, the TIG based welding-type system comprises an electrode holding component configured to engage an electrode, with the electrode holding component being configured to stick out the electrode by the pre-determined amount (or length), such as at least before a start of a weld. Further, in some example implementations, the TIG based welding-type system may also incorporate an additional mechanism to prevent the movement of the tungsten electrode under certain conditions, such as during welding, to prevent a bad connection. Providing automatic electrode stick out in this manner may offer various advantages, such as eliminating use of too much tungsten that may lead to bad welds or bad starts.

The sticking out of the pre-determined length of electrode may be triggered in response to particular, pre-defined criteria or conditions. In this regard, the automatic electrode stick out may be triggered in various ways, and the disclosure is not limited to one particular approach. For example, in some example implementations, the automatic electrode stick out may be triggered in response to a user interaction with the TIG based welding-type system and/or with a particular component thereof. The user interaction may have pre-defined characteristics (e.g., a pre-defined pattern or the like), with the TIG based welding-type system automatically feeding out pre-determined length of electrode in response to detecting the pre-defined characteristics.

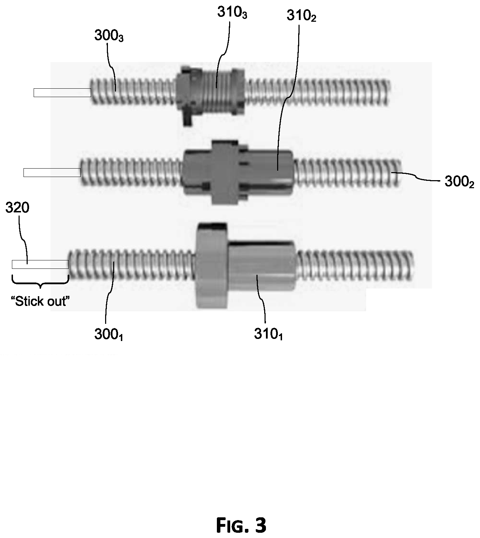

In an example implementation, the user interaction may be an interaction with the electrode holding component itself or a component thereof (e.g., a dedicated interaction element thereof) in a particular manner. For example, the TIG based welding-type system may feed out the pre-determined amount of electrode in response to the user interacting with the electrode holding component in particular pattern-e.g., clicking, sliding, twisting, pressing, or tapping the electrode holding component or the interaction element, and specifically when doing so in particular manner (e.g., clicking 3 times). Figs. 3-5 illustrate different example electrode holding components incorporating interaction elements configured for facilitating user interaction based on different interaction mechanisms for enabling automatic electrode stick out.

In some example implementations, the pre-set or pre-determined stick out amount is set or adjusted based on one or more attributes of the electrode. For example, the pre-set or pre-determined stick out amount may be set or adjusted based on one or both of a type of material of the electrode and at least one dimension of the electrode.

In some example implementations, the pre-set or pre-determined stick out amount is set or adjusted based on input and/or information relating to the feeding out of the pre-set amount. For example, the pre-set or pre-determined stick out amount may be set or adjusted based on one or more of user input (e.g., provided via input devices in the TIG based welding-type system), sensory information (e.g., obtained via sensors in the TIG based welding-type system), and information from a setup sheet or a database associated with the TIG based welding-type system and applying of welds via the TIG based welding-type system.

In some example implementations, the pre-set amount is set or adjusted dynamically. For example, the TIG based welding-type system may dynamically (on the fly) obtain information relating to the electrode and may determine the correct stick out length that is applied during the automatic electrode stick out operations.

In some example implementations, the TIG based welding-type system comprises one or more components configured to determine one or more attributes of the electrode that are used in conjunction with the automatic electrode stick out operations. For example, the TIG based welding-type system may comprise one or more sensors configured to obtain sensory information relating to the electrode (e.g., type of material, gauge, etc.), which are then used in determining the correct stick out length. In one example implementation, the sensors may simply comprise a scanner configured to read information embedded directly on the electrode or the spool (e.g., stickers, tags, scan codes, etc.). Nonetheless, actual sensors (e.g., measuring devices) may also be used. In some instances, an existing component in the system that is used during electrode feeding may be used to obtain such information.

In some example implementations, the TIG welding system comprises one or more components configured for use in conjunction with the feeding of the electrode, and the pre-set amount is set or adjusted to account for the one or more components. For example, the one or more components may comprise other components of the TIG torch (e.g., cups or nozzles, collets, gas lenses, and gas diffusers, etc.), and the automatic electrode stick out mechanism may account for these other component when determining and/or applying the electrode stick out.

In some example implementations, the electrode holding component comprises a mechanical actuator (e.g., a screw-like actuator or the like) configured for facilitating the sticking out of the pre-set amount of electrode.

In some example implementations, the electrode holding component comprises a locking mechanism configured for locking the electrode in place once the sticking out of the pre-set amount of electrode is completed.

In some example implementations, the TIG based welding-type system is configured to provide an indication or user feedback when the electrode is extended more than the pre-set amount of electrode.

In some example implementations, the electrode holding component is configured to retract or adjust amount of stick out of the electrode when the electrode is extended more than the pre-set amount of electrode.

In some example implementations, one or both of the electrode holding component and a control circuitry associated with the TIG based welding-type system are configured to disable power supply to the electrode during the sticking out of the pre-set amount of electrode. The power supply may be disable by, e.g., disengaging normal contact with the electrode. For example, the electrode holding component may comprise a suitable mechanical component (e.g., flip lever or the like), which would be actuated during stick out to disengage the electrode.

In some example implementations, the TIG based welding-type system comprises suitable circuitry for supporting the automatic electrode stick out operations. For example, the TIG based welding-type system may comprise suitable control circuitry configured to determine the pre-set amount as described herein, storage circuitry configured to store one or more pre-set amounts and/or information relating to selecting the pre-set amount, etc.

Fig. 3 illustrates example screw-like mechanism based electrode holding components for use in providing automatic feeding of electrode stick out. Shown in Fig. 3 are electrode holding components 300₁, 300₂, and 300₃.

Each of the electrode holding components 300₁, 300₂, and 300₃ may be configured for engaging an electrode 320, for use in a TIG based welding-type system (e.g., the TIG based welding-type system 100 of Fig. 2). In this regard, the electrode holding components 300₁, 300₂, and 300₃ may be configured for use within and/or in conjunction with a TIG torch, such as the welding torch 118 of Fig. 2.

The electrode holding components 300₁, 300₂, and 300₃ are configured for supporting automatic electrode stick out as described herein. In particular, each of the electrode holding components 300₁, 300₂, and 300₃ may be configured to automatically stick out the electrode 320 by a pre-determined amount (or length), such as before a start of a weld.

The sticking out of the pre-determined length of electrode 320 by the electrode holding components 300₁, 300₂, and 300₃ may be triggered in response to user interaction with these components. In this regard, the electrode holding components 300₁, 300₂, and 300₃ comprise, respectively, interaction elements 310₁, 310₂, and 310₃, each of which configured to trigger the automatic sticking out of the electrode 320 in response to user interaction therewith. As shown in Fig. 3, the interaction elements 310₁, 310₂, and 310₃ are implemented as screw-like mechanism based elements. As such, the user interaction may comprise a twisting like action by the user. To facilitate such action, the electrode holding components 300₁, 300₂, and 300₃ may incorporate threaded like structure as shown.

In this regard, the twisting-like action may need to meet particular pre-defined pattern to trigger the automatic sticking out of the electrode. For example, the user may need to twist the interaction elements 310₁, 310₂, and 310₃ a specific number of times (e.g., 3 twists) in order to trigger the automatic electrode stick out.

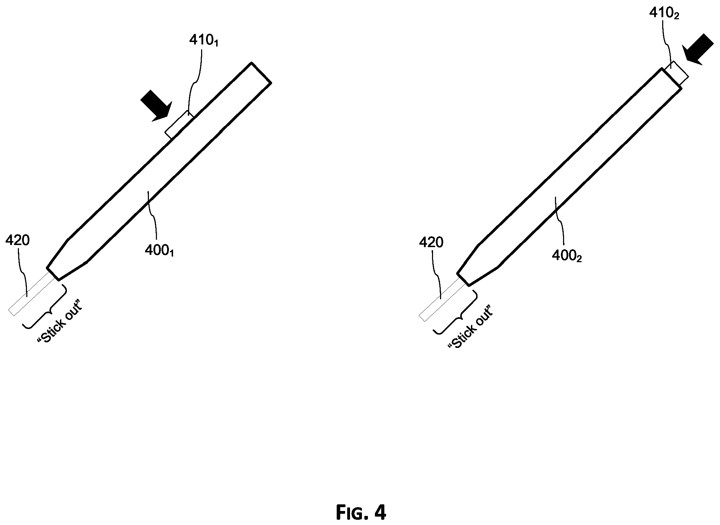

Fig. 4 illustrates example clicking-like mechanism based electrode holding components for use in providing automatic feeding of electrode stick out. Shown in Fig. 4 are electrode holding components 400, and 400₂.

Each of the electrode holding components 400, and 400₂ may be configured for engaging an electrode 420, for use in a TIG based welding-type system (e.g., the TIG based welding-type system 100 of Fig. 2). In this regard, the electrode holding components 400, and 400₂ may be configured for use within and/or in conjunction with a TIG torch, such as the welding torch 118 of Fig. 2.

The electrode holding components 400, and 400₂ are configured for supporting automatic electrode stick out as described herein. In particular, each of the electrode holding components 400, and 400₂ may be configured to automatically stick out the electrode 420 by a pre-determined amount (or length), such as before a start of a weld.

The sticking out of the pre-determined length of electrode 420 by the electrode holding components 400, and 400₂ may be triggered in response to user interaction with these components. In this regard, the electrode holding components 400, and 400₂ comprise, respectively, interaction elements 410₁ and 410₂, each of which configured to trigger the automatic sticking out of the electrode 420 in response to user interaction therewith. As shown in Fig. 4, the interaction elements 410₁ and 410₂ are implemented as clicking-like mechanism based elements. As such, the user interaction may comprise a clicking-like action by the user-e.g., clicking the interaction elements 410₁ and 410₂.

In this regard, the clicking-like action may need to meet particular pre-defined pattern to trigger the automatic sticking out of the electrode. For example, the user may need to click the interaction elements 410₁ and 410₂ a specific number of times (e.g., 3 clicks) in order to trigger the automatic electrode stick out.

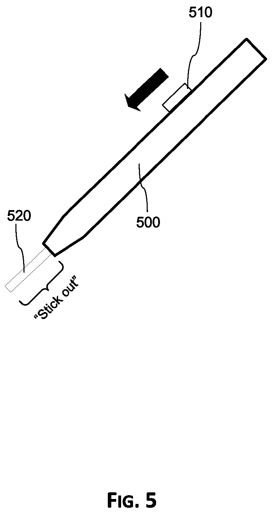

Fig. 5 illustrates example sliding-like mechanism based electrode holding component for use in providing automatic feeding of electrode stick out. Shown in Fig. 5 is an electrode holding component 500.

The electrode holding component 500 may be configured for engaging an electrode 520, for use in a TIG based welding-type system (e.g., the TIG based welding-type system 100 of Fig. 2). In this regard, the electrode holding component 500 may be configured for use within and/or in conjunction with a TIG torch, such as the welding torch 118 of Fig. 2.

The electrode holding component 500 is configured for supporting automatic electrode stick out as described herein. In particular, the electrode holding component 500 may be configured to automatically stick out the electrode 520 by a pre-determined amount (or length), such as before a start of a weld.

The sticking out of the pre-determined length of electrode 520 by the electrode holding component 500 may be triggered in response to user interaction with the component. In this regard, the electrode holding component 500 comprises an interaction element 510 configured to trigger the automatic sticking out of the electrode 520 in response to user interaction therewith. As shown in Fig. 5, the interaction element 510 are implemented as sliding-like mechanism based element. As such, the user interaction may comprise a sliding-like action by the user-e.g., sliding the interaction element 510.

In this regard, the sliding-like action may need to meet particular pre-defined pattern to trigger the automatic sticking out of the electrode. For example, the user may need to slide the interaction element 510 a specific distance and/or until reaching a trigger point, in order to trigger the automatic electrode stick out.

An example welding-type system, in accordance with the present disclosure comprises a welding-type torch that comprises an electrode holding component, wherein the electrode holding component is configured to engage an electrode, and wherein the electrode holding component is configured to a stick out the electrode by a pre-set amount at least before a start of a weld, in response to a user interaction with the electrode holding component.

In an example embodiment, the pre-set amount is set or adjusted based on one or more attributes of the electrode.

In an example embodiment, the one or more attributes of the electrode comprise at least one of a type of the electrode and at least one dimension of the electrode.

In an example embodiment, the pre-set amount is set or adjusted based on input and/or information relating to the sticking out of the pre-set amount.

In an example embodiment, the input and/or information relating to the sticking out of the pre-set amount comprises one or more of user input, sensory information, and information from a setup sheet or a database associated with the welding-type system and applying of welds via the welding-type system.

In an example embodiment, the pre-set amount is set or adjusted dynamically before the start of the weld.

In an example embodiment, the welding-type system further comprises control circuitry configured to determine the pre-set amount.

In an example embodiment, the welding-type system further comprises storage circuitry configured to store one or more pre-set amounts and/or information relating to selecting the pre-set amount.

In an example embodiment, the welding-type system further comprises one or more components configured to determine one or more attributes of the electrode.

In an example embodiment, the one or more components comprise at least one sensor or measuring device configured to obtain sensory information relating to at least one attribute of the electrode.

In an example embodiment, the welding-type system further comprises one or more components configured for use in conjunction with the sticking out of the electrode, and wherein the pre-set amount is set or adjusted to account for the one or more components. In this regard, the one or more components may comprise other components of the torch, such as cups or nozzles, collets, gas lenses, and gas diffusers, etc.

In an example embodiment, the user interaction comprises a pre-defined pattern, and wherein the electrode holding component is configured to stick out the pre-set amount of electrode in response to detecting the pre-defined pattern.

In an example embodiment, the electrode holding component comprises a user interaction element, wherein the pre-defined pattern comprises applying a pre-defined number of physical actions to the user interaction element.

In an example embodiment, the electrode holding component comprises a mechanical actuator configured for facilitating the sticking out of the pre-set amount of electrode.

In an example embodiment, the mechanical actuator comprises a screw-like mechanism configured for facilitating the sticking out of the pre-set amount of electrode.

In an example embodiment, the electrode holding component comprises a locking mechanism configured for locking the electrode in place once the sticking out of the pre-set amount of electrode is completed.

In an example embodiment, the welding-type system is configured to provide an indication or user feedback when the electrode is extended more than the pre-set amount of electrode.

In an example embodiment, the electrode holding component is configured to retract or adjust amount of stick out of the electrode when the electrode is extended more than the pre-set amount of electrode.

In an example embodiment, one or both of the electrode holding component and a control circuitry associated with the welding-type system are configured to disable power supply to the electrode during the sticking out of the pre-set amount of electrode.

In an example embodiment, one or both of the electrode holding component and a control circuitry associated with the welding-type system are configured to disable power supply by disengaging normal contact with the electrode.

In an example embodiment, the welding-type torch comprises a tungsten inert gas (TIG) based torch.

In an example embodiment, the welding-type system comprises a tungsten inert gas (TIG) based system.

Other implementations in accordance with the present disclosure may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Accordingly, various implementations in accordance with the present disclosure may be realized in hardware, software, or a combination of hardware and software. The present disclosure may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip.

Various implementations in accordance with the present disclosure may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present disclosure has been described with reference to certain implementations, it will be understood by those skilled in the art that various changes may be made and equivalents may be substituted without departing from the scope of the present disclosure. For example, block and/or components of disclosed examples may be combined, divided, re-arranged, and/or otherwise modified. In addition, many modifications may be made to adapt a particular situation or material to the teachings of the present disclosure without departing from its scope. Therefore, it is intended that the present disclosure not be limited to the particular implementation disclosed, but that the present disclosure will include all implementations falling within the scope of the appended claims.

Various embodiments of the invention are described in the following Clauses.

Clause 1. A welding-type system, comprising:
a welding-type torch that comprises an electrode holding component,
wherein the electrode holding component is configured to engage an electrode, and
wherein the electrode holding component is configured to a stick out the electrode by a pre-set amount at least before a start of a weld, in response to a user interaction with the electrode holding component.
Clause 2. The welding-type system of Clause 1, wherein the pre-set amount is set or adjusted based on one or more attributes of the electrode.
Clause 3. The welding-type system of Clause 2, wherein the one or more attributes of the electrode comprise at least one of a type of the electrode and at least one dimension of the electrode.
Clause 4. The welding-type system of Clause 1, wherein the pre-set amount is set or adjusted based on input and/or information relating to the sticking out of the pre-set amount.
Clause 5. The welding-type system of Clause 4, wherein the input and/or information relating to the sticking out of the pre-set amount comprises one or more of user input, sensory information, and information from a setup sheet or a database associated with the welding-type system and applying of welds via the welding-type system.
Clause 6. The welding-type system of Clause 1, wherein the pre-set amount is set or adjusted dynamically before the start of the weld.
Clause 7. The welding-type system of Clause 1, further comprising control circuitry configured to determine the pre-set amount.
Clause 8. The welding-type system of Clause 1, further comprising storage circuitry configured to store one or more pre-set amounts and/or information relating to selecting the pre-set amount.
Clause 9. The welding-type system of Clause 1, further comprising one or more components configured to determine one or more attributes of the electrode.
Clause 10. The welding-type system of Clause 9, wherein the one or more components comprise at least one sensor or measuring device configured to obtain sensory information relating to at least one attribute of the electrode.
Clause 11. The welding-type system of Clause 1, further comprising one or more components configured for use in conjunction with the sticking out of the electrode, and wherein the pre-set amount is set or adjusted to account for the one or more components.
Clause 12. The welding-type system of Clause 1, wherein the user interaction comprises a pre-defined pattern, and wherein the electrode holding component is configured to stick out the pre-set amount of electrode in response to detecting the pre-defined pattern.
Clause 13. The welding-type system of Clause 12, wherein the electrode holding component comprises a user interaction element, wherein the pre-defined pattern comprises applying a pre-defined number of physical actions to the user interaction element.
Clause 14. The welding-type system of Clause 1, wherein the electrode holding component comprises a mechanical actuator configured for facilitating the sticking out of the pre-set amount of electrode.
Clause 15. The welding-type system of Clause 14, wherein the mechanical actuator comprises a screw-like mechanism configured for facilitating the sticking out of the pre-set amount of electrode.
Clause 16. The welding-type system of Clause 1, wherein the electrode holding component comprises a locking mechanism configured for locking the electrode in place once the sticking out of the pre-set amount of electrode is completed.
Clause 17. The welding-type system of Clause 1, wherein the welding-type system is configured to provide an indication or user feedback when the electrode is extended more than the pre-set amount of electrode.
Clause 18. The welding-type system of Clause 1, wherein the electrode holding component is configured to retract or adjust amount of stick out of the electrode when the electrode is extended more than the pre-set amount of electrode.
Clause 19. The welding-type system of Clause 1, wherein one or both of the electrode holding component and a control circuitry associated with the welding-type system are configured to disable power supply to the electrode during the sticking out of the pre-set amount of electrode.
Clause 20. The welding-type system of Clause 19, wherein one or both of the electrode holding component and a control circuitry associated with the welding-type system are configured to disable power supply by disengaging normal contact with the electrode.
Clause 21. The welding-type system of Clause 1, wherein the welding-type torch comprises a tungsten inert gas (TIG) based torch.
Clause 22. The welding-type system of Clause 1, wherein the welding-type system comprises a tungsten inert gas (TIG) based system.

## Claims

1. A welding-type system, comprising:
a welding-type torch that comprises an electrode holding component,
wherein the electrode holding component is configured to engage an electrode, and
wherein the electrode holding component is configured to a stick out the electrode by a pre-set amount at least before a start of a weld, in response to a user interaction with the electrode holding component.

2. The welding-type system of claim 1, wherein the pre-set amount is set or adjusted based on one or more attributes of the electrode, optionally the one or more attributes of the electrode comprise at least one of a type of the electrode and at least one dimension of the electrode.

3. The welding-type system of claim 1, wherein the pre-set amount is set or adjusted based on input and/or information relating to the sticking out of the pre-set amount, optionally the input and/or information relating to the sticking out of the pre-set amount comprises one or more of user input, sensory information, and information from a setup sheet or a database associated with the welding-type system and applying of welds via the welding-type system.

4. The welding-type system of claim 1, wherein the pre-set amount is set or adjusted dynamically before the start of the weld.

5. The welding-type system of claim 1, further comprising control circuitry configured to determine the pre-set amount.

6. The welding-type system of claim 1, further comprising storage circuitry configured to store one or more pre-set amounts and/or information relating to selecting the pre-set amount.

7. The welding-type system of claim 1, further comprising one or more components configured to determine one or more attributes of the electrode, optionally the one or more components comprise at least one sensor or measuring device configured to obtain sensory information relating to at least one attribute of the electrode.

8. The welding-type system of claim 1, further comprising one or more components configured for use in conjunction with the sticking out of the electrode, and wherein the pre-set amount is set or adjusted to account for the one or more components.

9. The welding-type system of claim 1, wherein the user interaction comprises a pre-defined pattern, and wherein the electrode holding component is configured to stick out the pre-set amount of electrode in response to detecting the pre-defined pattern, optionally the electrode holding component comprises a user interaction element, wherein the pre-defined pattern comprises applying a pre-defined number of physical actions to the user interaction element.

10. The welding-type system of claim 1, wherein the electrode holding component comprises a mechanical actuator configured for facilitating the sticking out of the pre-set amount of electrode, optionally the mechanical actuator comprises a screw-like mechanism configured for facilitating the sticking out of the pre-set amount of electrode..

11. The welding-type system of claim 1, wherein the electrode holding component comprises a locking mechanism configured for locking the electrode in place once the sticking out of the pre-set amount of electrode is completed.

12. The welding-type system of claim 1, wherein the welding-type system is configured to provide an indication or user feedback when the electrode is extended more than the pre-set amount of electrode.

13. The welding-type system of claim 1, wherein the electrode holding component is configured to retract or adjust amount of stick out of the electrode when the electrode is extended more than the pre-set amount of electrode.

14. The welding-type system of claim 1, wherein one or both of the electrode holding component and a control circuitry associated with the welding-type system are configured to disable power supply to the electrode during the sticking out of the pre-set amount of electrode, optionally one or both of the electrode holding component and a control circuitry associated with the welding-type system are configured to disable power supply by disengaging normal contact with the electrode.

15. The welding-type system of claim 1, wherein the welding-type torch comprises a tungsten inert gas (TIG) based torch or a tungsten inert gas (TIG) based system.
